# EUROPEAN PATENT SPECIFICATION

(11) **EP 3 767 045 B1**
(45) Date of publication and mention of the grant of the patent: **23.02.2022**
(21) Application number: 20186565.6
(22) Date of filing: 17.07.2020
(51) Int. Cl.: E03B 7/00, G01M 3/28

(54) **METHOD AND SYSTEM FOR SEARCHING FOR WATER LEAKS BASED ON SECONDARY COSMIC RADIATION MEASUREMENTS**
VERFAHREN UND SYSTEM ZUR SUCHE NACH WASSERLECKEN AUF DER GRUNDLAGE VON SEKUNDÄREN KOSMISCHEN STRAHLUNGSMESSUNGEN
PROCÉDÉ ET SYSTÈME DE RECHERCHE DE FUITES D'EAU SUR LA BASE DE MESURES DE RAYONNEMENT COSMIQUE SECONDAIRE

(30) Priority: 17.07.2019 IT 201900012138
(43) Date of publication of application: 20.01.2021
(73) Proprietor: Neptune S.r.l., 04100 Latina (IT)
(72) Inventor: MARCHETTO, Riccardo, 04100 Latina (IT); MICHELINI, Giuseppe, 04100 Latina (IT)
(74) Representative: Sordini, Lorenzo

(56) References cited:
- FR-A1- 3 039 646
- US-A1- 2008 087 837

## Description

### CROSS-REFERENCE TO RELATED APPLICATIONS

This patent application claims priority from Italian patent application no. 102019000012138 filed on 17/07/2019.

### TECHNICAL SECTOR OF THE INVENTION

The present invention relates to the search for leaks in a water pipeline network, i.e. a general pipe network for transporting and/or distributing and/or conveying water. In particular, the present invention relates to a method and system for searching for leaks in a water pipeline network based on secondary cosmic radiation measurements.

### BACKGROUND

As known, leaks in a water pipeline network, for instance a water main, represent a serious problem, both economically, as they result in an economic damage for the administration/institution/company managing the network, and environmentally, as they involve wasting a natural precious resource.

A water leak may be due to different causes, such as a hole in a pipe, or a crack in a stuffing box, or the rupture of a pipe connecting joint, etc. The pressured leakage of water produces a "sound", or better a mechanical vibration, with a frequency between 300 and 3000 Hz, which propagates upstream and downstream at a rate depending on, among other things, the material constituting the pipe, as well as on the relative diameter and thickness.

Therefore, many of the methods known for searching for water leaks are based on the use of instruments enabling to detect the aforesaid sound, such as geophones or the so-called correlators (i.e. electro-acoustic apparatuses which represent an evolution of geophones and which allow locating a water leak with greater precision).

In addition, there also exist methods based of the use of tracing gases, such as an inert gas formed of a mixture of hydrogen (5%) and nitrogen (95%) which is detected by a suitable instrument at the spot where water leaks out.

Furthermore, sometimes the so-called "step tests" are also used in the search for water leaks, i.e. specific tests (normally carried out at night) which provide to selectively search for leaks on single sectors of the water pipeline network (by suitably closing specific valves).

All the aforesaid methods involve a long search time, are invasive for the end-user and above all they do not provide optimal results, as they do not enable to dramatically reduce the presence of leaks.

Furthermore, the aforesaid methods also involve rather expensive searching costs. For instance, supposing to search for water leaks over an area of 100 km² where a water pipeline network formed of 500 km of pipes is present, the aforesaid searching methods, generally characterised by an average search cost of 150 Euros per km, would result in an overall search cost of about 75,000 Euros.

Over the last years a general improvement of performances was possible (in particular, it was possible to reduce times and costs for searching for water leaks) thanks to techniques based on the processing and analysis of images generated by remote sensing systems (typically satellite images) for detecting moisture in the soil. FR 3 039 646 discloses a method for searching for leaks in a water pipeline network, comprising:- acquiring georeferencing data of a water pipeline network-carrying out a processing of the acquired data and generating, based on the processing carried out, - a georeferenced digital map imaging the water pipeline network and soil moisture content in the region where said water pipeline network extends - detecting and locating one or more leaks in the water pipeline network based on the georeferenced digital map generated.

For example, Applicant's Italian patent No. 102015000039946 discloses a system for searching for water leaks of the aforesaid type.

In particular, the method according to 102015000039946 comprises:
a) obtaining georeferencing data of a water pipeline network (for instance, one or more georeferenced maps of the water pipeline network);
b) acquiring, based on the georeferencing data of the water pipeline network, images (such as, synthetic aperture radar images, images remotely sensed by optical sensors and/or sensors operating in the thermal infra-red spectrum, multispectral and/or hyperspectral images) generated by remote sensing systems (such as, by satellite and/or aerial platforms), wherein the acquired images represent a region of the earth's surface where said water pipeline network extends;
c) carrying out a processing of the acquired images and of the georeferencing data of the water pipeline network and generating, based on the processing carried out, a georeferenced digital map imaging said water pipeline network and soil moisture content in the region where said water pipeline network extends; and
d) detecting and locating one or more leaks in the water pipeline network based on the georeferenced digital map generated.

Furthermore, the step b) of the method according to 102015000039946 includes acquiring, from at least a database storing images of the earth's surface generated by remote sensing systems, only images imaging a region of the earth's surface where the water pipeline network extends and remotely sensed under meteorological conditions that meet specific meteorological requirements.

More specifically, said step b) includes:
- selecting, among the images stored in said database storing images of the earth's surface generated by remote sensing systems, only the images imaging a region of the earth's surface where the water pipeline network extends and remotely sensed under meteorological conditions that meet specific meteorological requirements, discarding
   - all the images that do not image a region of the earth's surface where the water pipeline network extends and
   - all the images that image a region of the earth's surface where the water pipeline network extends and that have been remotely sensed under meteorological conditions that do not meet said predefined meteorological requirements; and
- acquiring, from said database storing images of the earth's surface generated by remote sensing systems, only the selected images.

In greater detail, said step b) includes:
- searching, in said database storing images of the earth's surface generated by remote sensing systems, images of a region of the earth's surface where the water pipeline network extends; and,
- for each image found,
   - controlling, based on data retrieved from one or more meteorological database, meteorological conditions of the region where the water pipeline network extends at the date of remote sensing of said image and
   - acquiring said image only if the meteorological conditions meet said predefined meteorological requirements.

Conveniently, according to 102015000039946 it derives that:
- the leaks in the water pipeline network are detected and located by carrying out an analysis of the soil moisture content shown in the georeferenced digital map at, or close to, said water pipeline network; and
- said predefined meteorological requirements are indicative of predefined meteorological conditions suitable to carry out said soil moisture content analysis.

As explained above, the use of techniques based on processing and analysis of images generated by remote sensing systems has enabled to dramatically reduce times and costs for searching for water leaks if compared to traditional methods. In fact, techniques based on processing and analysis of images generated by remote sensing systems allow to remotely monitor a water pipeline network in a much shorter time than that needed in the on-the-field search carried out by operators along the whole water pipeline network extension. Furthermore, with such techniques, operators are only employed during the final step of identifying and repairing leaks at the geographical positions identified by the processing and analysis of the remote-sensed images.

In any case, despite such performance improvement, it is still today highly perceived the need for new technologies that allow to further reduce times and costs for searching for leaks in a water pipeline network.

### OBJECT AND SUMMARY OF THE INVENTION

In the light of what previously described, an object of the present invention is, thus, to provide a technical solution which enables to further reduce times and costs for searching for water leaks, increasing search reliability and precision and dramatically reducing the presence of leaks in a water pipeline network.

Additionally, a further object of the present invention is to provide a technical solution to be exploited in synergy with the presently known methods/techniques for searching for water leaks.

These and other objects are achieved by the present invention in that it relates to a method and system for searching for leaks in a water pipeline network, according to what defined in the enclosed claims.

In particular, the present invention concerns a method for searching for leaks in a water pipeline network, said method comprising:
- acquiring georeferencing data of a water pipeline network and data indicative of georeferenced secondary cosmic radiation measurements carried out in a region of the earth's surface where said water pipeline network extends;
- carrying out a processing of the acquired data and generating, based on the processing carried out, a georeferenced digital map imaging the water pipeline network and soil moisture content in the region where said water pipeline network extends; and
- detecting and locating one or more leaks in the water pipeline network based on the georeferenced digital map generated.

In particular, carrying out a processing of the acquired data includes estimating the soil moisture content in the region where the water pipeline network extends based on the data indicative of the georeferenced secondary cosmic radiation measurements carried out in said region, using correction factors for the measurements which take into account:
- radial and anisotropy sensitivity effects of the georeferenced secondary cosmic radiation measurements carried out;
- values of air humidity, atmospheric pressure and intensity of the incident secondary cosmic radiation detected/measured simultaneously to execution of said measurements in the region where the water pipeline network extends or in positions of the earth's surface where said measurements are carried out;
- effects related to the presence of vegetation and/or artificial or natural humidity (for example, swimming pools, dikes, irrigation channels, etc.).

### BRIEF DESCRIPTION OF THE DRAWINGS

In order to better understand the present invention, some preferred embodiments, provided for merely exemplary and non-limiting purposes, will now be illustrated with reference to the enclosed drawings (not in a scale), wherein:
- Figure 1 schematically illustrates an example of top level architecture of a measurement device according to a preferred embodiment of the present invention;
- Figure 2 schematically illustrates a method for searching for leaks in a water pipeline network according to a preferred embodiment of the present invention;

- Figure 3 schematically illustrates an example of functioning principle that can be used to estimate soil moisture content based on secondary cosmic radiation measurements;
- Figure 4 shows an example of a georeferenced digital map generated by implementing the method of Figure 2; and
- Figure 5 schematically illustrates a system for searching for leaks in a water pipeline network according to a preferred embodiment of the present invention.

### DETAILED DESCRIPTION OF PREFERRED EMBODIMENTS OF THE INVENTION

The following description is provided to enable a person skilled in the art to make and use the invention. Various modifications to the embodiments set forth will be immediately clear to the persons skilled in the art and the general principles herein disclosed may be applied to other embodiments and applications without, however, departing from the scope of protection of the present invention as defined in the enclosed claims.

The present invention originates from Applicant's idea of exploiting secondary cosmic radiation measurements to search for, and detect, leaks in a water pipeline network.

As known, cosmic rays are energy particles coming from the outer space, which the Earth is exposed to as well as any other celestial body. Their origin is very diverse: the Sun, the other stars, energy events such as novas and supernovas, as well as remote objects such as quasars.

The majority of cosmic rays arriving at the earth's surface is a secondary product of showers formed in the atmosphere by primary cosmic rays, interacting in such a way as to typically produce a cascade of secondary particles starting from a single energy particle of primary cosmic radiation (which may include protons, helium cores, electrons, photons, neutrinos, positrons and antipositrons).

In particular, once arrived in the earth atmosphere, primary cosmic radiation particles interact with the atmosphere molecule cores thus forming, in a cascade process, new atomic and sub-atomic particles (for example electrons, positrons, neutrinos, pions, muons and neutrons) directed to the ground, that are called secondary cosmic rays (or secondary cosmic radiations).

The secondary cosmic radiation particles are spread over a given energy spectrum, and once arrived on the ground, interact in different ways with the various elements present in the soil. In particular, a part of such energy particles (for instance neutrons) are more or less sensitive, depending on the respective energy band, to the presence of water in/on the soil (in fact, the interactions between water and the secondary cosmic radiation particles which will be hereinafter discussed occur both when the water is on the surface of the soil, and when it is beneath it - after all, a water leak from an underground water pipe might also emerge on the surface).

Specifically, the water present on/in the soil has a moderating and absorbing effect on neutrons (as it is well known in the nuclear engineering field, whose technologies and knowledges on neutrons are now being widely recognized) .

Therefore, it is possible to determine (i.e. estimate) the water content in/on the soil and thus detect the presence of possible water leaks based on the secondary cosmic radiation measurements (conveniently, neutron measurements of secondary cosmic rays) performed in different positions on the earth's surface.

In fact, obtaining georeferencing data of a water pipeline network (for instance, one or more georeferenced maps of the water pipeline network), it is possible to:
- generate, based on said georeferencing data of the water pipeline network and of data indicative of georeferenced measurements of secondary cosmic radiation performed in a region of the earth's surface where the water pipeline network extends, a georeferenced digital map imaging said water pipeline network and a water content (or, similarly, humidity/moisure content) of the soil in the region where said water pipeline network extends; and, therefore,
- identify (i.e. detect) and locate potential leaks in the water pipeline network based on the georeferenced digital map (conveniently, based on an analysis of the water/moisture content of the soil showed in the georeferenced digital map at, or close to, said water pipeline network).

Conveniently, the secondary cosmic radiation measurements are performed at the soil to increase measurement precision (for example, measurements may be conveniently performed by means of measurement devices that are fixed and/or installed on vehicles moving in the region where the water pipeline network extends). In this regard it must be noted that, as the height from the ground level at which the measurements are carried out increases, the precision in detecting the water content in/on the soil, namely the reliability and precision in detecting water leaks, diminishes. It is however important to note that, since technological progress will inevitably develop in the near future, the height from the ground at which measurements of secondary cosmic radiation can be carried out may even increase, ensuring in any case a high level of reliability and precision in detecting the water leaks (for instance, in the future, measurements may be even possible by means of drones flying at a low altitude on the region where the water pipeline network extends).

In greater detail, techniques for detecting neutrons of secondary cosmic rays to monitor the water content in the soil are already currently known and the relative measurement devices/systems are already available. Such technology is known with the name of "Cosmic Ray Neutron Sensing" or "Cosmic Ray Neutron Sensor" (CRNS).

In this respect, reference can be made, for instance to the article by M. O. Köhli et al., entitled "Footprint Characteristics Revised for Field-Scale Soil Moisture Monitoring with Cosmic-Ray Neutrons", Water Resources Research, 51, June 2015, doi: 10.1002/ 2015WR017169.

Unlike systems wherein neutrons are actively generated by radioactive sources whereby different problems must be taken into account (e.g. high radioactivity, soil destruction, invasive approach, limited action range), the secondary cosmic radiation (and consequently its particles as well, among which neutrons) is, by nature, always present on the earth's surface.

As previously explained, once reached the earth atmosphere, primary cosmic rays generate high-energy neutrons that propagate to the ground being moderated by the air. Hydrogen (and thus water) contained in the soil has a greater moderating effect than air. These processes lead to a neutron density in the air representing an average of the hydrogen abundance (and thus of water) in the soil, in the air and in the vegetation and that can be locally sampled by means of neutron-sensitive sensors.

In particular, the presence of water (and thus of hydrogen) in/on the soil predictably reduces the amount of neutrons that can be measured in the time unit. Thus, the amount of water in/on the soil can be assessed monitoring the amount of neutrons in the air.

Regarding the energy spectrum of the neutrons of secondary cosmic rays, it must be noted that:
- high-energy neutrons (approximately, greater than 1 MeV) are relatively insensitive to the water;
- at lower energies (approximately, between 1ev and 1 MeV), hydrogen (and thus water) may indeed moderate neutrons;
- thermal neutrons (approximately, with energy lower than 1 eV) are slow and sensitive to other chemical/material elements/compounds.

In this respect, it is worth drawing the attention on the fact that the aforesaid extreme values of the various energy bands are purely indicative. In fact, it is possible that, with future technological progresses (and/or new scientific discoveries), the value ranges of the various energy bands may vary and/or the measurements can focus on one or more specific sub-ranges of one or more specific energy bands.

Therefore, in order to determine the amount of water, i.e. moisture, present on/in the soil in a given region of the earth's surface where also a water pipeline network is present, it is possible to use one or more measurement devices that are:
- installed
   - in a fixed manner in respective positions in said region of the earth's surface and/or
   - on-board vehicles that move in said region (for instance, vehicles specifically and merely intended for this measuring service, or vehicles intended for other services (e.g. waste collection, public transport, roadside assistance, etc.) advantageously exploited also for this measuring service) or aircraft (e.g. drones) flying (for instance at a low altitude) on said region;
- configured to carry out secondary cosmic radiation measurements - conveniently, measurements of neutrons of secondary cosmic rays (for instance by means of one or more CRNS sensors) and/or of other atomic and/or sub-atomic particles of secondary cosmic rays (e.g. muoniums) - more conveniently, to measure amounts of neutrons in the domain of the intermediary energies, namely with energy between approximately 1 eV and 1 MeV; and
- configured to store data indicative of the measurements carried out (in particular, indicative of the results of said measurements).

Preferably, the measurement devices also comprise:
- a satellite localisation device of the GNSS type (for instance of the GPS, Galileo, GLONASS, etc. type) to determine the position (in the case of fixed measurement device) or the positions (in the case of a measurement device installed on a vehicle) - and, conveniently, even the time (i.e. date and time) - at which the secondary cosmic radiation measurements are carried out;
- an electronic control unit programmed to georeference the secondary cosmic radiation measurements carried out, based on the data provided by the satellite localisation device and to store (for instance, on a data memory duly provided in the measurement device) data indicative of the georeferenced secondary cosmic radiations carried out; and,
- conveniently, also a radio-communication device (for instance, based on GSM/GPRS/UMTS/LTE/5G or wi-fi technology) for transmitting data indicative of the measures carried out (for instance, to a processing central system) and/or for remotely controlling the measurements carried out and/or, more generally, for remotely controlling the measurement device.

As will be hereinafter explained, it might be convenient to further provide measurement devices with atmospheric pressure and air humidity sensors such to further associate, with the georeferenced measurements, also corresponding atmospheric pressure and air humidity data.

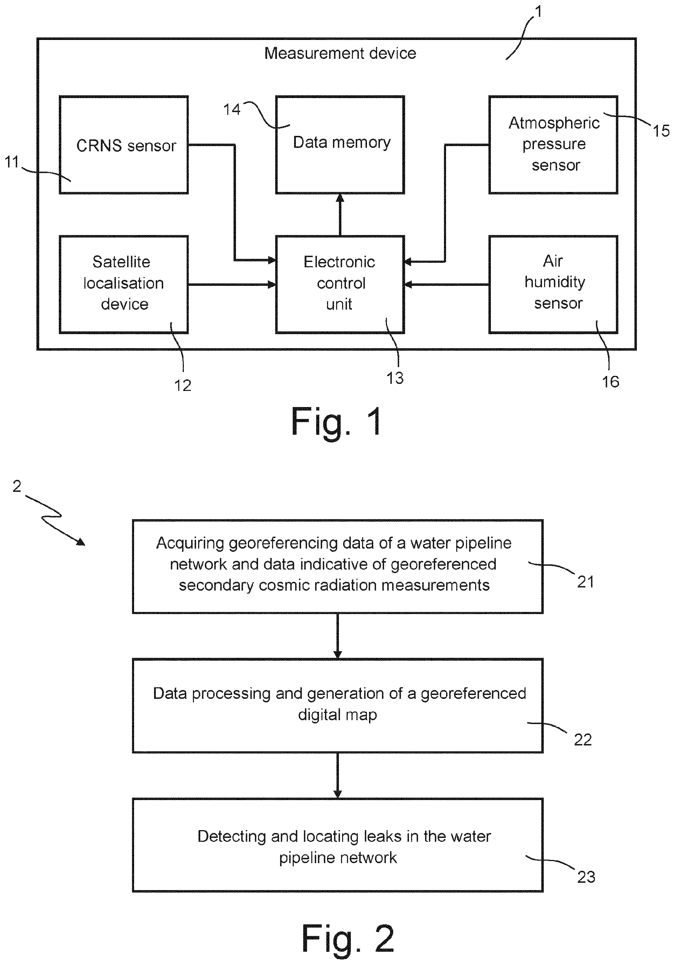

In this respect, in Figure 1 an example of top level architecture of a measurement device (indicated as a whole by 1) according to a preferred (though not at all limiting, nor binding) embodiment of the present invention is schematically illustrated.

In particular, as shown in Figure 1, the measurement device 1 comprises a CRNS sensor 11, a satellite localisation device 12, an electronic control unit 13, a data memory 14, an atmospheric pressure sensor 15 and an air humidity sensor 16. Such components of the measurement device 1 are obviously configured to operate as above explained.

Conveniently, the CRNS 11 sensor is configured to:
- carry out neutron measurements in a predefined energy range; and
- guarantee a substantially constant detection efficiency in said predefined energy range, which makes correction factors of the signal weighted on different energy levels unnecessary (³He-moderated sensors are seen as guaranteeing such requirement).

Furthermore, the measurement device 1 may conveniently comprise an air temperature sensor (not illustrated in Figure 1) in order to acquire also temperature data corresponding to measurements carried out by the CRNS sensor 11.

It is worth noting that the satellite localisation device may also not be provided for fixed measurement devices, for which determining the measurement device position during installation may be sufficient.

Thanks to the use of said measurement devices it is possible to create one or more databases containing data indicative of the georeferenced secondary cosmic radiation measurements carried out by all the employed measurement devices. Conveniently, the database(s) may comprise also data indicative of the date and the time of each measurement carried out and, even more conveniently, also corresponding atmospheric pressure and air humidity data.

In order to better understand the present invention, a method for searching for leaks in a water pipeline network (indicated as a whole by 2) according to a preferred embodiment of the present invention is illustrated in Figure 2.

In particular, as shown in Figure 2, the method 2 includes:
- acquiring georeferencing data of a water pipeline network and data indicative of georeferenced secondary cosmic radiation measurements carried out in a region of the earth's surface where said water pipeline network extends (block 21);
- carrying out a processing of the acquired data and generating, based on the processing carried out, a georeferenced digital map imaging the water pipeline network and soil moisture content in the region where said water pipeline network extends (block 22); and
- detecting and locating one or more leaks in the water pipeline network based on the georeferenced digital map generated (block 23).

Conveniently, the step of detecting and locating leaks in the water pipeline network (block 23) is based on an analysis of the georeferenced digital map, where such analysis aims at identifying areas where the water pipeline network passes (or immediately adjacent to the water network pipes) and where the soil moisture content is high (for instance greater than a predefined threshold indicative of, or calculated based on, an average moisture value of the surrounding soil and/or an average of the soil moisture values calculated in the past for the same position).

Conveniently, the data processing (block 22) includes estimating the soil moisture content (i.e. the amount of water in the soil) in the region where the water pipeline network extends based on the data indicative of the georeferenced secondary cosmic radiation measurements carried out in said region, by using correction factors for the measurements which conveniently take account of the following variables:
- radial sensitivity - the majority of neutrons measured reproduce the soil as much faithfully as the distance of the measurement device diminishes;
- anisotropy - presence of roads as well as different types of soils, etc.;
- air humidity - air, due to its water content, affects the presence of detectable neutrons;
- presence of vegetation - depending on the vegetation height the neutron count varies (as the height increases, the count diminishes);
- atmospheric pressure - depending on the atmospheric pressure the neutron count varies (if the pressure diminishes, the count increases; in fact, when the pressure is lower, the lower air density allows neutrons to cover longer distances among collisions);
- intensity of the incident secondary cosmic radiation - a generally accepted approach accepts the similarity between the incident high-energy component and the dynamics of the incident neutrons.

Also, the maximum distance at which a certain percentage of detected neutrons originates is a function, not only of the soil moisture content (resulting in the possibility to detect water leaks in the water pipeline), but also of the air humidity (when the air is dry, the maximum distance increases).

Furthermore, the depth in the soil reached by a certain percentage of detected neutrons is a function of the soil moisture content.

In the past, these conclusions were the result of studies conducted through numeric methods, integrating the function which describes the number of detected neutrons coming from an area placed at a predefined distance from the probe and studying the behaviour thereof as the different parameters vary. The effects that the different environmental parameters have on the rate of the detected neutrons can be conveniently implemented in the data processing software algorithm (block 22), thereby making such algorithm extremely powerful in terms of the resulting precision and indications on the presence of water in the vicinity of the measurement devices.

In particular, in order to determine the soil moisture content, the data processing software algorithm (block 22) may conveniently match the data related to the neutron count and/or to other atomic and/or sub-atomic particles deriving from secondary cosmic rays (e.g., muons) with data related to air humidity, atmospheric pressure and, possibly, also other anisotropy factors.

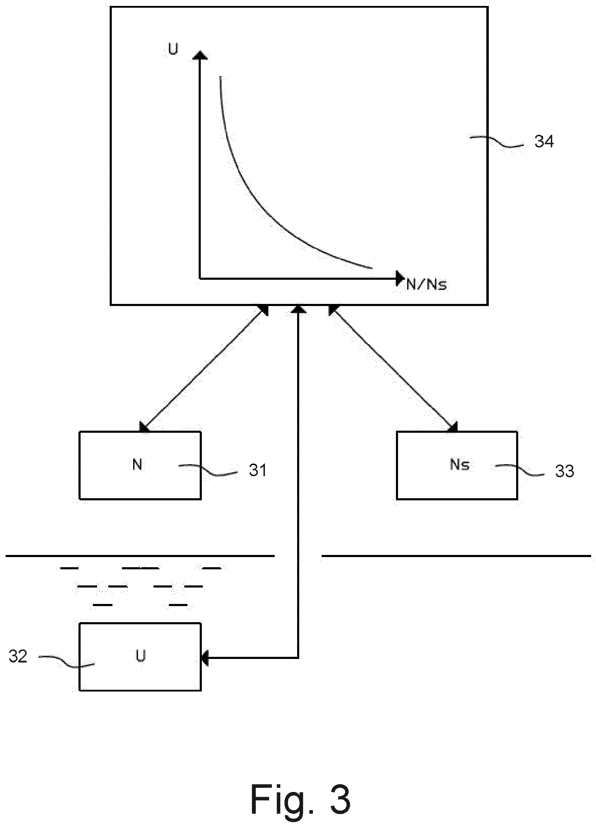

An example of operation principle that can be used to estimate the soil moisture content is schematically shown in Figure 3, wherein it can be seen that a value N (indicated by 31) of secondary cosmic ray atomic and/or sub-atomic particles measured at a soil containing a certain amount of moisture U (indicated by 32) and normalised with respect to a value Ns (indicated by 33) of secondary cosmic ray atomic and/or sub-atomic particles measured in presence of dry soil, is linked to the soil moisture value U 32 according to a certain relation that can take into account one or more parameters and that is represented in Figure 3, for merely exemplary purposes, as an inverse proportional relation (indicated as a whole by 34). Therefore, if a water leak is present, the measured number of particles diminishes relative to the dryer surrounding soil.

As regards the step of acquiring data (block 21 in Figure 2), the water pipeline network georeferencing data may conveniently comprise one or more georeferenced maps of said water pipeline network. Conveniently, said georeferencing data are provided by the administration/institution/company managing the water pipeline network to be inspected. Georeferenced maps of the water pipeline network may be provided, for example, in Gauss Boaga 1984 32N or 33N format and conveniently report all the pipes of interest, either supply lines or secondary ones.

Furthermore, the method 2 conveniently also includes:
- carrying out secondary cosmic measurements (preferably, as above explained, measurements of amounts of neutrons and/or other secondary cosmic ray atomic and/or sub-atomic particles) in different positions on the earth's surface, wherein said measurements are georeferenced, as explained above (and conveniently, also associated with additional data indicating the date and time at which the measurements are carried out and the atmospheric pressure and air humidity measured concurrently with the measurements); and
- creating one or more databases containing data indicative of the georeferenced measurements of secondary cosmic radiation carried out and, conveniently, also the additional data associated with said measurements.

In this case, referring to the step of acquiring data (block 21 in Figure 2), acquiring data indicative of georeferenced measurements of secondary cosmic radiation conveniently comprises:
- searching on said database(s) and selecting data indicative of secondary cosmic radiation measurements carried out in a region of the earth's surface where the water pipeline network to be inspected extends (i.e. a region corresponding to georeferencing data (i.e. the geographical coordinates) of said water pipeline network); and
- acquiring the selected data.

Preferably, the step of searching and selecting data indicative of the secondary cosmic radiation carried out in the region of the earth's surface where the water pipeline network extends comprises:
- for each secondary cosmic radiation measurement carried out in said region,
   - controlling meteorological and/or environmental conditions in, and/or conditions of secondary cosmic radiation incident on, said region at the date of execution of said measurement and,
   - if the meteorological and/or environmental and/or incident secondary cosmic radiation conditions meet predefined requirements, selecting the data indicative of said measurement.

Selecting the measurements carried out based on the control of the meteorological and/or environmental and/or incident secondary cosmic radiation conditions allows to:
- discard the measurements carried out with meteorological and/or environmental and/or incident secondary cosmic radiation conditions that are not suitable for, or even interfering with, the estimate of the soil moisture (i.e. water) content (for instance, measurements carried out during high humidity and/or low pressure periods, intense rains and snowfalls);
- select only measurements carried out with meteorological and/or environmental and/or incident secondary cosmic radiation conditions that are suitable for estimating the soil moisture content (for instance, measurements carried out during low humidity and high pressure periods, clear weather and/or dry climate);
- select only measurements carried out with average incident secondary cosmic radiation conditions; and
- carry out suitable corrections depending on the secondary cosmic radiation incident on the region at the date and time of execution of the measurements.

In this way, reliability and precision of the results obtained are improved thanks to the implementation of the method 2. Conveniently, the control of meteorological and/or environmental and/or incident secondary cosmic radiation conditions may be carried out based on data and information retrieved from suitable databases.

Furthermore, as regards the step of generating the georeferenced digital map (block 22 in Figure 2), as explained above, in said georeferenced digital map the water pipeline network is imaged together with the soil moisture (i.e. water) content (for instance, using different chromatic/intensity levels suitably scaled and provided with caption). In this way, easily comprehensible graphical representations are obtained which allow a human operator to recognise at a glance where possible leaks are located.

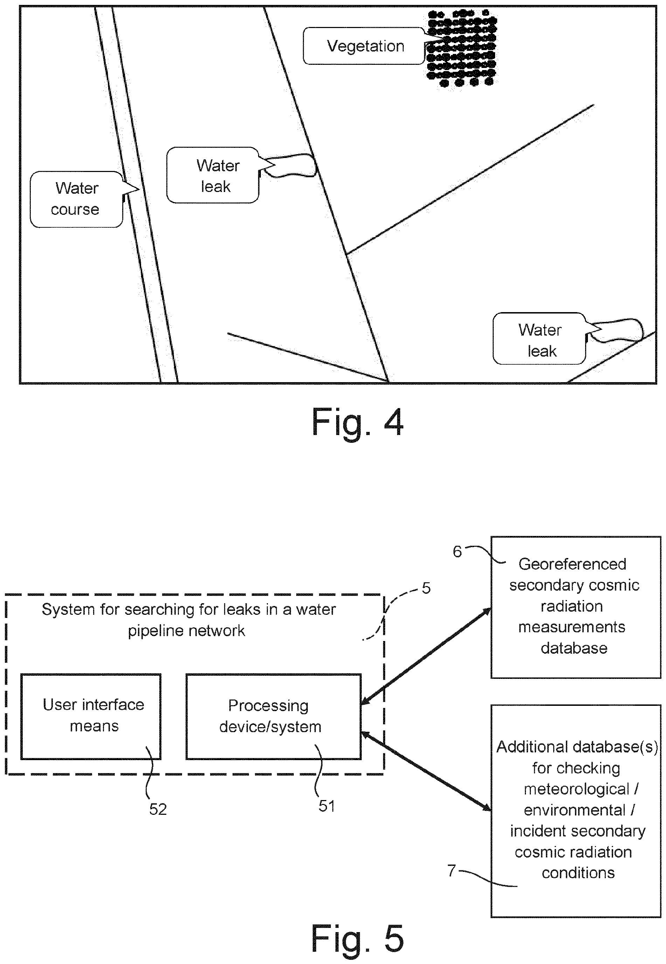

In this respect, an example of a georeferenced digital map generated thanks to the method 2 is shown in Figure 4.

In particular, on the map in Figure 4, which shows a water pipeline network and the soil moisture content in the region where said water pipeline network extends, the water leaks detected by means of the execution of the method 2 are indicated, as well as elements identified by processing the secondary radiation measurements (in particular, a water course and vegetation).

Thanks to the use of the method 2, it is therefore possible to send an operator in the identified geographical points for a final search on the spot (carried out, for example by a geophone) in order to find the leak, or better to identify the cause of the leak and, therefore remove it.

Conveniently, thanks to the use of the method 2, it is possible to also produce a digital document containing the list of the leaks provided with respective georeferencing data, according to the severity of the water leak. Such document can be conveniently loaded on suitable systems installed on-board the team vehicles for searching for water leaks so as to allow driving, by a satellite navigator integrated in such vehicles, the teams searching for water leaks directly where leaks are located, starting from the most severe ones.

The method 2 can be conveniently implemented by means of a suitable system. In this respect, a system for searching for leaks in a water pipeline network (indicated as a whole by 5) designed to carry out the method 2, in particular including a processing device/system 51 (for instance, made by a computer, a server, a computer/server network, or a processing system based on a cloud computing architecture) programmed (by means of one or more suitable software programmes) to implement the method 2 is schematically illustrated in Figure 5.

Preferably, the system 5 also includes user interface means 52 designed to enable a user to input data and/or give commands (for instance through a keyboard and/or a mouse and/or a touch screen) and to display the results of searches carried out, in particular to display on a screen the georeferenced digital maps with the indication of the identified leaks.

The processing device/system 51 is conveniently configured to connect (for instance through one or more telecommunication networks):
- to one or more databases 6 which store data indicative of georeferenced measurements of secondary cosmic radiation at different positions on the earth's surface, in order to carry out the search, selection and acquisition of data of interest in the search for leaks in a specific water pipeline network; and,
- preferably, also to one or more additional databases 7 which store data that enable the processing device/system 51 to carry out the control of meteorological and/or environmental and or incident secondary cosmic radiation conditions.

Furthermore, even if not shown in Figure 5, the system 5 can conveniently comprise also a plurality of measurement devices such as the measurement device 1 illustrated in Figure 1 and previously described, in order to carry out the secondary cosmic radiation measurements on the earth's surface. In particular, as explained above, such measurement devices may be conveniently installed in a fixed manner at predefined positions and/or on-board vehicles (or, more generally, any type of vehicle or transport means) or aircrafts/drones, with a driver/pilot, or remotely- or autonomously guided.

It is now important to draw the attention on the fact that the present invention can conveniently also take advantage of other types of secondary cosmic radiation measurements, in order to search for leaks in a water pipeline network, in addition or in alternative to the neutron measurements (conveniently, in addition or in alternative to the neutron count measurements), for instance measurements of atomic and/or sub-atomic particles of secondary cosmic rays other than the neutrons, for instance muonium measurements (conveniently, muonium count measurements).

The innovative characteristics and the technical advantages of the present invention are immediately clear to a person skilled in the art from the above description.

In this respect, it is first of all important to underline that the present invention teaches how to take advantage, in a totally innovative and inventive way, for a completely new application (i.e. detection of leaks in water pipeline networks), of an already existing technology such as the detection of the soil moisture/water content based on secondary cosmic radiation measurements (in particular, measurements of counts of secondary cosmic ray neutrons), which technology has been used to the present date only for applications other than water leak detection, such as meteorological forecasts, monitoring of climate changes, monitoring of snow on the ground and monitoring of biomasses.

Furthermore, it is worth drawing the attention on the fact that the present invention allows to dramatically reduce times and costs for searching for a water leak if compared to the presently used methods and techniques. The present invention allows in fact to remotely monitor a water pipeline network in a very short time if compared to the time required to operators searching on the spot along the entire extension of the water pipeline network (as previously explained, with the present invention operators are only employed in the final step of identifying and repairing leaks at the geographical positions identified using, indeed, the present invention).

More specifically, the present invention allows to reduce times and costs in the search for water leaks, to increase search reliability and precision and to reduce the presence of leaks in a water pipeline network, if compared to the presently used methods and techniques for searching for water leaks (specifically, the methods/techniques based on the use of geophones, correlators, tracing gases, step tests, as well as those based on processing and analysing images generated by remote sensing systems). Also, the present invention can be advantageously exploited in synergy with such presently known methods/techniques for searching for water leaks.

Furthermore, the present invention offers the following advantages:
- high reliability and high precision in identifying and locating leaks;
- possibility to estimate the size of the identified leaks, as well as to provide possible inconveniences resulting from such leaks;
- increase in responsiveness in identifying and ranking leaks with resulting reduction of water production and distribution costs;
- dramatic reduction in the presence of leaks in a water pipeline network;
- immediate imaging of leaks on a georeferenced digital map;
- no limit of extension;
- high-resolution identified points (about 5 m);
- non-invasive technology, with no contact with the soil and no damage for the environment;
- no inconvenience for end users;
- measurement devices that can be realised according to different methods (specifically, fixed-type and/or mobile-type measurement devices which can be installed on any type of transport means);
- reduction of costs, risks and labour needed to search for and repair pipes;
- cost reduction for maintenance, working, products used, etc.;
- cost reduction for supplying water to users;
- brief amortisation period;
- no bureaucracy.

Finally, referring again to the previous hypothesis of water leak search over an area of 100 km² where there is a water pipeline network formed of 500 kms of pipes, it is important to draw the attention on the fact that the present invention would involve an overall cost of 40,000/50,000 Euros, saving up to 30/40% if compared to 75,000 Euros required by the present search methods.

In conclusion, it is important to note that, while the above described invention refers in particular to very specific embodiments, it must not be intended as limited to such embodiments, including within its scope all the variants, modifications or simplifications covered by the enclosed claims. For instance, as above explained, in order to implement the present invention, secondary cosmic radiation measurements other than the neutron count (for example, muonium counts) may as well be conveniently exploited, in addition, or in alternative, to the neutron count measurements. Furthermore, in order to carry out the secondary cosmic radiation measurements, the measurement devices (apart from the fixed -type ones and those installed on vehicles) may be installed on aircrafts, for example drones.

## Claims

1. Method (2) for searching for leaks in a water pipeline network, comprising:
• acquiring georeferencing data of a water pipeline network and data indicative of georeferenced secondary cosmic radiation measurements carried out in a region of the earth's surface where said water pipeline network extends (block 21);
• carrying out a processing of the acquired data and generating, based on the processing carried out, a georeferenced digital map imaging the water pipeline network and soil moisture content in the region where said water pipeline network extends (block 22); and
• detecting and locating one or more leaks in the water pipeline network based on the georeferenced digital map generated (block 23);
**characterized in that** carrying out a processing of the acquired data includes estimating the soil moisture content in the region where the water pipeline network extends, based on the data indicative of the georeferenced secondary cosmic radiation measurements carried out in said region, by using correction factors for the measurements which take into account:
• radial and anisotropy sensitivity effects of the georeferenced secondary cosmic radiation measurements carried out;
• values of air humidity, atmospheric pressure and intensity of the incident secondary cosmic radiation detected/measured simultaneously to execution of said measurements in the region where the water pipeline network extends or in positions of the earth's surface where said measurements are carried out;
• effects related to presence of vegetation and/or artificial or natural humidity.

2. The method of claim 1, further comprising:
• carrying out secondary cosmic radiation measurements in different positions of the earth's surface;
• georeferencing the secondary cosmic radiation measurements carried out; and
• creating a database (6) containing data indicative of the secondary cosmic radiation measurements carried out and georeferenced;
wherein acquiring data indicative of georeferenced secondary cosmic radiation measurements carried out in a region of the earth's surface where the water pipeline network extends includes:
• searching on said database (6) and selecting, on the basis of the georeferencing data of the water pipeline network, data indicative of secondary cosmic radiation measurements carried out in said region of the earth's surface where said water pipeline network extends; and
• acquiring the selected data.

3. The method of claim 2, wherein searching on said database (6) and selecting, on the basis of the georeferencing data of the water pipeline network, data indicative of secondary cosmic radiation measurements carried out in the region of the earth's surface where the water pipeline network extends includes:
• for each secondary cosmic radiation measurement carried out in said region,
- controlling meteorological and/or environmental conditions in, and/or conditions of secondary cosmic radiation incident on, said region simultaneously to execution of said measurement and,
- if the meteorological and/or environmental and/or incident secondary cosmic radiation conditions meet predefined requirements, selecting the data indicative of said measurement.

4. The method according to claim 2 or 3, wherein the secondary cosmic radiation measurements are carried out by measurement devices (1) which are installed:
• in a fixed manner in respective positions of the earth's surface; and/or
• on-board vehicles and/or aircraft that move/fly on/over the earth's surface;
wherein each measurement device (1) comprises a respective satellite localisation device (12) to determine, for each secondary cosmic radiation measurement carried out by said measurement device (1), a corresponding position where said measurement is carried out;
and wherein georeferencing the secondary cosmic radiation measurements carried out includes associating, by each measurement device (1), the secondary cosmic radiation measurements carried out by said measurement device (1) with the corresponding positions determined by the respective satellite localisation device (12).

5. The method of claim 4, wherein georeferencing the secondary cosmic radiation measurements carried out includes associating, by each measurement device (1), each secondary cosmic radiation measurement carried out by said measurement device (1):
• with the corresponding position determined by the respective satellite localisation device (12); and
• with a date and a time at which said measurement has been carried out.

6. The method according to claim 4 or 5, wherein each measurement device (1):
• also comprises a respective atmospheric pressure sensor (15) and a respective air humidity sensor (16) for measuring, for each secondary cosmic radiation measurement carried out by said measurement device (1), corresponding atmospheric pressure and air humidity values; and
• is configured to associate each secondary cosmic radiation measurement carried out by said measurement device (1) also with the corresponding atmospheric pressure and air humidity values measured by the respective atmospheric pressure (15) and air humidity (16) sensors.

7. The method according to any preceding claim, wherein the secondary cosmic radiation measurements are measurements of atomic and/or subatomic particles of secondary cosmic rays.

8. The method of claim 7, wherein the secondary cosmic radiation measurements are counts of neutrons and/or muoniums of secondary cosmic rays.

9. The method according to any preceding claim, wherein the leaks in the water pipeline network are detected and located by carrying out an analysis of the soil moisture content at, or close to, said water pipeline network in the georeferenced digital map.

10. The method according to any preceding claim, wherein the georeferencing data of the water pipeline network comprises one or more georeferenced maps of said water pipeline network.

11. System (5) configured to carry out the method (2) for searching for leaks in a water pipeline network as claimed in any preceding claim.

12. Computer program product comprising software code portions that are:
• executable by a processing device/system (51); and
• such that to cause, when executed, said processing device/system (51) to implement the method (2) for searching for leaks in a water pipeline network as claimed in any claim from 1 to 10.

## Patentansprüche

1. Verfahren (2) zum Suchen nach Lecken in einem Wasserleitungsnetzwerk, umfassend:
Erlangen von Georeferenzierungsdaten eines Wasserleitungsnetzwerks und von Daten, die aus georeferenzierten Messungen sekundärer kosmischer Strahlung stammen, die in einem Bereich der Erdoberfläche durchgeführt wurden, in dem sich besagtes Wasserleitungsnetzwerk erstreckt (Block 21);
Durchführen einer Verarbeitung der erlangten Daten und Erzeugen einer georeferenzierten digitalen Karte, die das Wasserleitungsnetzwerk und einen Bodenfeuchtigkeitsgehalt in dem Bereich darstellt, in dem sich besagtes Wasserleitungsnetzwerk erstreckt, basierend auf der ausgeführten Verarbeitung (Block22); und
Ermitteln und Lokalisieren eines oder mehrerer Lecken in dem Wasserleitungsnetzwerk basierend auf der generierten georeferenzierten digitalen Karte (Block 23),
**dadurch gekennzeichnet, dass** das Durchführen einer Verarbeitung der erlangten Daten ein Abschätzen des Bodenfeuchtigkeitsgehalts in dem Bereich, in dem sich das Wasserleitungsnetzwerk erstreckt, basierend auf den Daten, die aus den georeferenzierten Messungen sekundärer kosmischer Strahlung stammen, die in besagtem Bereich durchgeführt wurden, unter Verwendung von Korrekturfaktoren umfasst, die Folgendes berücksichtigen:
radiale und anisotrope Empfindlichkeitseffekte der durchgeführten georeferenzierten Messungen sekundärer kosmischer Strahlung;
Luftfeuchtigkeitswerte, atmosphärische Druckwerte und Intensitätswerte der ermittelten/gemessenen einfallenden sekundären kosmischen Strahlung zeitgleich mit der Ausführung besagter Messungen in dem Bereich, in dem sich das Wasserleitungsnetzwerk erstreckt, oder an Positionen auf der Erdoberfläche, an denen besagte Messungen durchgeführt werden;
Effekte, die mit dem Vorhandensein von Vegetation und/oder künstlicher oder natürlicher Luftfeuchtigkeit zusammenhängen.

2. Das Verfahren nach Anspruch 1, ferner umfassend:
Durchführen von Messungen sekundärer kosmischer Strahlung an unterschiedlichen Positionen auf der Erdoberfläche;
Georeferenzieren der durchgeführten Messungen sekundärer kosmischer Strahlung; und
Erstellen einer Datenbank (6), die Daten enthält, die aus den durchgeführten und georeferenzierten Messungen sekundärer kosmischer Strahlung stammen,
wobei das Erlangen von Daten, die aus georeferenzierten Messungen sekundärer kosmischer Strahlung stammen, die in einem Bereich der Erdoberfläche durchgeführt wurden, in dem sich besagtes Wasserleitungsnetzwerk erstreckt, folgendes umfasst:
Suchen in besagter Datenbank (6) und Auswählen von Daten, die die aus georeferenzierten Messungen sekundärer kosmischer Strahlung stammen, die in besagtem Bereich der Erdoberfläche durchgeführt wurden, in dem sich besagtes Wasserleitungsnetzwerk erstreckt, basierend auf den Georeferenzierungsdaten des Wasserleitungsnetzwerks; und
Erlangen der ausgewählten Daten.

3. Das Verfahren nach Anspruch 2, wobei das Suchen in besagter Datenbank (6) und Auswählen von Daten, die aus georeferenzierten Messungen sekundärer kosmischer Strahlung stammen, die in dem Bereich der Erdoberfläche durchgeführt wurden, in dem sich das Wasserleitungsnetzwerk erstreckt, basierend auf den Georeferenzierungsdaten des Wasserleitungsnetzwerks folgendes umfasst:
für jede Messung sekundärer kosmischer Strahlung, die in besagtem Bereich durchgeführt wird,
Kontrollieren von meteorologischen Bedingungen und/oder Umweltbedingungen in und/oder von Bedingungen sekundärer kosmischer Strahlung einfallend auf besagten Bereich zeitgleich mit der Durchführung der besagten Messung und
Auswählen der Daten, die aus besagter Messung stammen, wenn die meteorologischen Bedingungen und/oder Umweltbedingungen und/oder Bedingungen der einfallenden sekundären kosmischen Strahlung vordefinierte Voraussetzungen erfüllen.

4. Das Verfahren gemäß Anspruch 2 oder 3, wobei die Messungen sekundärer kosmischer Strahlung von Messgeräten (1) durchgeführt werden, welche
an entsprechenden Positionen auf der Erdoberfläche fest; und/oder
an Bord von Fahrzeugen und/oder Flugzeugen die sich auf / über der Erdoberfläche bewegen / fliegen
installiert sind,
wobei jedes Messgerät (1) ein entsprechendes Satellitenortungsgerät (12) zum Bestimmen einer korrespondierenden Position, an der besagte Messung durchgeführt wird, für jede Messung sekundärer kosmischer Strahlung, die von dem besagten Messgerät (1) durchgeführt wird, umfasst, und
wobei das Georeferenzieren der durchgeführten Messungen sekundärer kosmischer Strahlung ein Assoziieren der Messungen sekundärer kosmischer Strahlung, die von besagtem Messgerät (1) durchgeführt werden, mit den korrespondierenden Positionen, die von dem entsprechenden Satellitenortungsgerät (12) bestimmt werden, durch jedes Messgerät (1) umfasst.

5. Das Verfahren nach Anspruch 4, wobei das Georeferenzieren der durchgeführten Messungen sekundärer kosmischer Strahlung ein Assoziieren jeder Messung sekundärer kosmischer Strahlung, die von besagtem Messgerät (1) durchgeführt wurde,
mit der entsprechenden Position, die von dem entsprechenden Satellitenortungsgerät (12) bestimmt wurde; und
mit einem Datum und einer Zeit, zu welcher besagte Messung ausgeführt worden ist,
durch jedes Messgerät (1) umfasst.

6. Das Verfahren nach Anspruch 4 oder 5, wobei jedes Messgerät (1) :
auch ein einen entsprechenden Sensor für atmosphärischen Druck (15) und einen entsprechenden Luftfeuchtigkeitssensor (16) zum Messen entsprechender atmosphärischer Druckwerte und Luftfeuchtigkeitswerte für jede Messung sekundärer kosmischer Strahlung, die von besagtem Messgerät (1) durchgeführt wurde, umfasst; und
eingerichtet ist, jede Messung sekundärer kosmischer Strahlung, die von besagtem Messgerät (1) durchgeführt wurde, auch mit dem entsprechenden atmosphärischen Druckwerten und Luftfeuchtigkeitswerten, die von den entsprechenden Sensoren für atmosphärischen Druck (15) und Luftfeuchtigkeitssensoren (16) gemessen wurden, zu assoziieren.

7. Das Verfahren gemäß einem der vorherigen Ansprüche, wobei die Messungen sekundärer kosmischer Strahlung Messungen von atomaren und/oder subatomaren Partikeln sekundärer kosmischer Strahlen sind.

8. Das Verfahren nach Anspruch 7, wobei die Messungen sekundärer kosmischer Strahlung Zählungen von Neutronen und/oder Myonen sekundärer kosmischer Strahlen sind.

9. Das Verfahren gemäß einem der vorherigen Ansprüche, wobei die Lecke in dem Wasserleitungsnetzwerk durch ein Durchführen einer Analyse des Bodenfeuchtigkeitsgehalts an oder nahe bei besagtem Wasserleitungsnetzwerk in der georeferenzierten digitalen Karte erkannt und lokalisiert werden.

10. Das Verfahren gemäß einem der vorherigen Ansprüche, wobei die Georeferenzierungsdaten des Wasserleitungsnetzwerks eine oder mehrere georeferenzierte Karten besagten Wasserleitungsnetzwerks umfassen.

11. System (5), das eingerichtet ist, das Verfahren (2) zum Suchen nach Lecken in einem Wasserleitungsnetzwerk wie in einem der vorherigen Ansprüche beansprucht durchzuführen.

12. Computerprogrammprodukt, umfassend Softwarecodestücke, die:
von einem Verarbeitungsgerät/-system (51) ausführbar sind; und
derart sind, dass sie besagtes Verarbeitungsgerät/-system (51) veranlassen, das Verfahren (2) zum Suchen nach Lecken in einem Wasserleitungsnetzwerk wie in einem der Ansprüche 1 bis 10 beansprucht zu implementieren, wenn sie ausgeführt werden.

## Revendications

1. Procédé (2) de recherche de fuites dans un réseau de canalisations d'eau, comprenant de :
• acquérir des données de géoréférencement d'un réseau de canalisations d'eau et des données indicatives de mesures de rayonnement cosmique secondaire géoréférencées effectuées dans une région de la surface terrestre où s'étend ledit réseau de canalisations d'eau (bloc 21) ;
• effectuer un traitement des données acquises et générer, sur la base du traitement effectué, une carte numérique géoréférencée représentant le réseau de canalisations d'eau et une teneur en humidité du sol dans la région où s'étend ledit réseau de canalisations d'eau (bloc 22) ; et
• détecter et localiser une ou plusieurs fuites dans le réseau de canalisations d'eau sur la base de la carte numérique géoréférencée générée (bloc 23) ;
**caractérisé en ce que** le fait d'effectuer un traitement des données acquises comporte d'estimer la teneur en humidité du sol dans la région où s'étend le réseau de canalisations d'eau, sur la base des données indicatives des mesures de rayonnement cosmique secondaire géoréférencées effectuées dans ladite région, en utilisant des facteurs de correction pour les mesures qui prennent en compte :
• des effets de sensibilité radiale et d'anisotropie des mesures de rayonnement cosmique secondaire géoréférencées effectuées ;
• des valeurs d'humidité de l'air, de pression atmosphérique et d'intensité du rayonnement cosmique secondaire incident détectées/mesurées simultanément à l'exécution desdites mesures dans la région où s'étend le réseau de canalisations d'eau ou dans des positions de la surface terrestre où lesdites mesures sont effectuées ;
• des effets liés à la présence de végétation et/ou d'humidité artificielle ou naturelle.

2. Procédé de la revendication 1, comprenant en outre de :
• effectuer des mesures de rayonnement cosmique secondaire dans différentes positions de la surface terrestre ;
• géoréférencer les mesures de rayonnement cosmique secondaire effectuées ; et
• créer une base de données (6) contenant des données indicatives des mesures de rayonnement cosmique secondaire effectuées et géoréférencées ;
dans lequel l'acquisition de données indicatives de mesures de rayonnement cosmique secondaire géoréférencées effectuées dans une région de la surface terrestre où s'étend le réseau de canalisations d'eau comporte de :
• rechercher dans ladite base de données (6), et sélectionner sur la base des données de géoréférencement du réseau de canalisations d'eau, des données indicatives de mesures de rayonnement cosmique secondaire effectuées dans ladite région de la surface terrestre où s'étend ledit réseau de canalisations d'eau ; et
• acquérir les données sélectionnées.

3. Procédé de la revendication 2, dans lequel la recherche dans ladite base de données (6), et la sélection sur la base des données de géoréférencement du réseau de canalisations d'eau, de données indicatives de mesures de rayonnement cosmique secondaire effectuées dans la région de la surface terrestre où s'étend le réseau de canalisations d'eau comporte de :
• pour chaque mesure de rayonnement cosmique secondaire effectuée dans ladite région,
- contrôler simultanément, à l'exécution de ladite mesure, les conditions météorologiques et/ou environnementales dans ladite région et/ou les conditions du rayonnement cosmique secondaire incident sur celle-ci, et
- si les conditions météorologiques et/ou environnementales et/ou de rayonnement cosmique secondaire incident répondent à des exigences prédéfinies, sélectionner les données indicatives de ladite mesure.

4. Procédé selon la revendication 2 ou 3, dans lequel les mesures de rayonnement cosmique secondaire sont effectuées par des dispositifs de mesure (1) qui sont installés :
• de manière fixe dans des positions respectives de la surface terrestre ; et/ou
• à bord de véhicules qui se déplacent sur la surface terrestre et/ou d'aéronefs qui volent au-dessus de celle-ci ;
dans lequel chaque dispositif de mesure (1) comprend un dispositif de localisation de satellite respectif (12) pour déterminer, pour chaque mesure de rayonnement cosmique secondaire effectuée par ledit dispositif de mesure (1), une position correspondante où ladite mesure est effectuée ;
et dans lequel le géoréférencement des mesures de rayonnement cosmique secondaire effectué comporte d'associer, au moyen de chaque dispositif de mesure (1), les mesures de rayonnement cosmique secondaire effectuées par ledit dispositif de mesure (1) aux positions correspondantes déterminées par le dispositif de localisation de satellite respectif (12).

5. Procédé de la revendication 4, dans lequel le géoréférencement des mesures de rayonnement cosmique secondaire effectuées comporte d'associer, au moyen de chaque dispositif de mesure (1), chaque mesure de rayonnement cosmique secondaire effectuée par ledit dispositif de mesure (1) :
• à la position correspondante déterminée par le dispositif de localisation de satellite respectif (12) ; et
• à une date et à une heure auxquelles ladite mesure a été effectuée.

6. Procédé selon la revendication 4 ou 5, dans lequel chaque dispositif de mesure (1) :
• comprend également un capteur de pression atmosphérique respectif (15) et un capteur d'humidité de l'air respectif (16) pour mesurer, pour chaque mesure de rayonnement cosmique secondaire effectuée par ledit dispositif de mesure (1), des valeurs de pression atmosphérique et d'humidité de l'air correspondantes ; et
• est configuré pour associer chaque mesure de rayonnement cosmique secondaire effectuée par ledit dispositif de mesure (1) également aux valeurs de pression atmosphérique et d'humidité de l'air correspondantes mesurées par les capteurs de pression atmosphérique (15) et d'humidité de l'air (16) respectifs.

7. Procédé selon l'une quelconque des revendications précédentes, dans lequel
les mesures de rayonnement cosmique secondaire sont des mesures de particules atomiques et/ou subatomiques de rayons cosmiques secondaires.

8. Procédé de la revendication 7, dans lequel les mesures de rayonnement cosmique secondaire sont des comptages de neutrons et/ou de muoniums de rayons cosmiques secondaires.

9. Procédé selon l'une quelconque des revendications précédentes, dans lequel les fuites dans le réseau de canalisations d'eau sont détectées et localisées en effectuant une analyse de la teneur en humidité du sol au niveau dudit réseau de canalisations d'eau ou à proximité de celui-ci dans la carte numérique géoréférencée.

10. Procédé selon l'une quelconque des revendications précédentes, dans lequel les données de géoréférencement du réseau de canalisations d'eau comprennent une ou plusieurs cartes géoréférencées dudit réseau de canalisations d'eau.

11. Système (5) configuré pour effectuer le procédé (2) de recherche de fuites dans un réseau de canalisations d'eau selon l'une quelconque des revendications précédentes.

12. Produit de programme informatique comprenant des parties de code de logiciel qui sont :
• exécutables par un dispositif/système de traitement (51) ; et
• telles qu'elles amènent, lorsqu'elles sont exécutées, ledit dispositif/système de traitement (51) à mettre en œuvre le procédé (2) de recherche de fuites dans un réseau de canalisations d'eau selon l'une quelconque des revendications de 1 à 10.
